# EUROPÄISCHE PATENTSCHRIFT

(11) **EP 3 233 417 B1**
(45) Veröffentlichungstag und Bekanntmachung des Hinweises auf die Patenterteilung: **05.12.2018**
(21) Anmeldenummer: 15816695.9
(22) Anmeldetag: 11.12.2015
(51) Int. Cl.: B29C 47/88, B29C 47/92, B29C 43/22, B29C 33/04

(54) **FOLIENMASCHINE UND VERFAHREN ZUR HERSTELLUNG VON STRETCHFOLIEN**
MACHINE AND PROCESS FOR PRODUCING STRETCHABLE FILMS
MACHINE ET PROCÉDÉ POUR LA FABRICATION DES FILMS ÉTIRABLES

(30) Priorität: 19.12.2014 DE 102014119205
(43) Veröffentlichungstag der Anmeldung: 25.10.2017
(60) Teilanmeldung: 18161745.7
(73) Patentinhaber: Windmöller & Hölscher KG, 49525 Lengerich (DE)
(72) Erfinder: SCHMITZ, Torsten, 48268 Greven (DE); SCHLENGER, Christian, 49219 Glandorf (DE); STÖVEKEN, Daniel, 48161 Münster (DE); COLELL, Waldemar, 49536 Lienen (DE)
(86) Internationale Anmeldenummer: PCT/EP2015/079393
(87) Internationale Veröffentlichungsnummer: WO 2016/096646

(56) Entgegenhaltungen:
- DE-A1- 1 479 904
- DE-A1-102008 035 737
- DE-T2- 69 314 404
- US-A- 3 374 303
- US-A- 5 295 805
- US-A1- 2010 258 960

## Beschreibung

Die Erfindung betrifft eine Folienmaschine und ein Verfahren für die Anpassung einer Putzposition einer Putzwalze einer Folienmaschine.
Es ist bekannt, dass Folienmaschinen eingesetzt werden, um Stretchfolie herzustellen. Die Druckschriften US 3 374 303 A, DE 693 14 404 T2, DE 10 2008 035737 A1 und DE 14 79 904 A1 offenbaren Folienmaschinen. Üblicherweise sind solche Folienmaschinen mit einer Auslassvorrichtung ausgebildet, welche von einem Extruder zur Verfügung gestelltes flüssiges Folienmaterial durch einen Auslassspalt auf eine Gießwalze anordnet. Diese Gießwalze dreht sich üblicherweise und ist insbesondere kühlbar ausgebildet. Während der Drehung wird das fließfähig aufgebrachte Folienmaterial unter die Schmelztemperatur abkühlen. Durch das Erstarren wird das Folienmaterial zu einer Folienbahn, welche von der Gießwalze abgehoben und weitertransportiert werden kann. Dabei ist von entscheidender Bedeutung, dass in ausreichender Weise gekühlt wird, um aus dem flüssigen bzw. fließfähigen Folienmaterial die feste Folienbahn herzustellen, bevor das Abheben der Folienbahn erfolgt. Während des Kühlprozesses kann es dazu kommen, dass Bestandteile des fließfähigen Folienmaterials ausgasen und auf der Oberfläche der Gießwalze kondensieren. Es entstehen also Kondensatverschmutzungen zwischen dem Folienmaterial und der Oberfläche der Gießwalze. Über einen längeren Produktionsprozess können solche Verschmutzungen sich aufbauen und zu hohem Ausschuss oder sogar Abreißen innerhalb der Folienmaschine führen. Daher sind Putzvorrichtungen mit Putzwalzen bekannt, welche das Folienmaterial im Bereich der Frostlinie, welche den Übergang zwischen dem fließfähigen Folienmaterial und dem festen Folienmaterial darstellt, putzen. Die Putzfunktion wird derart durchgeführt, dass durch ein Andrücken mit der Putzwalze das Folienmaterial gegen die Oberfläche der Gießwalze gedrückt wird und auf diese Weise die Kondensattröpfchen und andere Verunreinigungen gemeinsam mit der Folienbahn von der Gießwalze abgehoben und abtransportiert werden.

Nachteilhaft bei den bekannten Folienmaschinen ist es, dass die Putzwalze eine definierte Position aufweist. Diese definierte Positionierung führt dazu, dass eine Limitierung hinsichtlich der Liniengeschwindigkeit der Folienmaschine besteht. Bei Stretchfolien ist insbesondere der Grad der Dehnfähigkeit von hoher Bedeutung für die Qualität und den Preis der Stretchfolie. Eine hohe Dehnbarkeit ist insbesondere durch hohe Schmelztemperaturen des eingesetzten Folienmaterials sowie langsame Abkühlraten zu erzielen. Jedoch wird durch die definierte Position der Putzwalze und die notwendige Korrelation der Position der Putzwalze zur Frostlinie eine Variation der Kontaktlänge auf der Gießwalze nicht möglich. Damit kann entweder nur eine maximale Dehnfähigkeit für die Stretchfolie erreicht werden, oder aber bei langsamen Abkühlraten und/oder hohen Schmelztemperaturen eine entsprechend langsame Liniengeschwindigkeit bei der Folienmaschine eingesetzt werden.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Liniengeschwindigkeit der Folienmaschine zu erhöhen.

Voranstehende Aufgabe wird gelöst durch eine Folienmaschine mit den Merkmalen des Anspruchs 1 und ein Verfahren mit den Merkmalen des Anspruchs 4, Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Folienmaschine beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird bzw. werden kann.
Eine erfindungsgemäße Folienmaschine dient der Herstellung von Stretchfolie. Hierfür ist eine Auslassvorrichtung mit einem Auslassspalt vorgesehen für den Auslass fließfähigen Folienmaterials auf eine drehbar gelagerte Gießwalze. Dabei wird das ausgelassene fließfähige Folienmaterial auf der Oberfläche der Gießwalze aufgenommen. Weiter ist eine Putzvorrichtung vorgesehen, mit einer drehbar gelagerten Putzwalze für eine Kontaktierung des auf der Oberfläche der Gießwalze angeordneten Folienmaterials. Eine erfindungsgemäße Folienmaschine zeichnet sich nun dadurch aus, dass die Putzvorrichtung einen Verstellmechanismus mit einer Umfangsverstellung für eine Verstellung einer Putzposition der Putzwalze entlang der Umfangsrichtung der Gießwalze aufweist.
Eine erfindungsgemäße Folienmaschine basiert also grundsätzlich auf bekannten Folienmaschinen und weist insbesondere eine Putzvorrichtung auf. Die Funktion der Putzwalze ist grundsätzlich in bekannter Weise durchzuführen, so dass ebenfalls ein Kontaktieren und Andrücken des fließfähigen Folienmaterials, welches auf der Oberfläche der Gießwalze angeordnet ist, zu einem Eindrücken der Verschmutzungen zwischen Folienmaterial und Oberfläche der Gießwalze führt. Damit kann eine insbesondere temporäre Verbindung zwischen der Verschmutzung und dem Folienmaterial eingegangen werden, welche zu einem Mitnehmen dieser Verschmutzung beim Abheben der Folienbahn führt.
Um die voranstehende Putzfunktion sicherzustellen, ist von entscheidender Bedeutung, dass die Putzvorrichtung und damit auch die Putzwalze sich in einer definierten Putzposition befindet. Die Putzposition ist dabei insbesondere in einem Bereich anzubringen, in welchem auch die Frostlinie des Folienmaterials sich befindet. Unter einer Frostlinie ist im Sinne der vorliegenden Erfindung der Punkt bzw. die Linie, insbesondere derjenige Bereich entlang der Umfangsrichtung der Gießwalze zu verstehen, in welchem der Übergang zwischen dem fließfähigen Folienmaterial und dem festen Folienmaterial stattfindet. Da es sich üblicherweise bei einer Folienmaschine um einen kontinuierlich durchgeführten Produktionsprozess handelt, wird sich ein quasi stationärer Zustand einstellen, welcher zu einem definierten Punkt bzw. einer definierten Umfangslinie der Gießwalze führt, an welchem die Frostlinie angeordnet ist.

Im Bereich der Frostlinie ist nun zum einen das Folienmaterial bereits hart genug, dass eine entsprechende Kraftaufnahme durch die Kontaktierung mit der Putzwalze durchgeführt werden kann. Gleichzeitig ist das fließfähige Folienmaterial im Bereich der Frostlinie noch weich genug, dass auf der Innenseite zur Oberfläche der Gießwalze hin die entsprechenden Verunreinigungen eingedrückt und mitgenommen werden können.

Der erfindungsgemäß vorgesehene Verstellmechanismus erlaubt nun eine deutlich erhöhte Flexibilität der Putzvorrichtung. So kann die Putzwalze, insbesondere in definierten Grenzen bzw. zwischen definierten Endanschlägen eine Verstellung durchführen. Diese Verstellung erfolgt entlang der Umfangsrichtung der Gießwalze, also in Rotationsrichtung oder gegen Rotationsrichtung der Gießwalze. Dadurch, dass üblicherweise der Auslassspalt und die Abhebeposition, zum Beispiel mittels einer Abrisswalze, definiert ausgebildet sind, kann durch die Verstellung der Putzwalze nun einer Variation der Frostlinie gefolgt werden. Erfolgt beispielsweise in der Folienmaschine ein Wechsel des Materials, so ist häufig auch ein Wechsel der Schmelztemperatur vorhanden. Dies führt wiederum zu einer Veränderung der Frostlinie hinsichtlich der Positionierung, wenn die Liniengeschwindigkeit gleich bleibt. Während bei den bisher bekannten Folienmaschinen bei hohen Schmelztemperaturen die Liniengeschwindigkeit gedrosselt werden musste, um durch reduzierte Geschwindigkeit die gleichbleibende Kontaktlänge dahingehend anzupassen, dass die Frostlinie mit der festen Position der Putzwalze zusammenpasst, kann in erfindungsgemäßer Weise nun eine flexible Anpassung der Putzposition erfolgen. Insbesondere erlaubt dies eine möglichst maximale Ausnutzung der zur Verfügung stehenden Kontaktfläche auf der Gießwalze. So kann selbst bei hohen Schmelztemperaturen durch eine Maximalbewegung der Putzwalze nach hinten eine langsame Kühlrate mit entsprechend langsamer Kühlfunktionalität der Gießwalze zur Verfügung gestellt werden.

Bei einer erfindungsgemäßen Putzwalze kann diese selbstverständlich an die Putzfunktion angepasst werden. So sind beispielsweise gummierte Oberflächen denkbar, um eine verbesserte Putzwirkung zu erzielen. Auch Spiralnutungen sind möglich, um einen Abtransport von Luftblasen aus der Folienbahn bzw. von der Putzwalze weg zu verbessern. Neben den nun auf diese Weise erzielbaren hohen Dehnfähigkeiten kann gleichzeitig auch die Liniengeschwindigkeit und damit die zeitbezogene Produktionskapazität einer solchen Folienmaschine deutlich erhöht werden.

Bei der erfindungsgemäßen Folienmaschine weist der Verstellmechanismus eine Radialverstellung für eine Verstellung der Radialposition der Putzwalze auf zur Veränderung des Abstandes und/oder der Andruckkraft der Putzwalze zur Oberfläche der Gießwalze. Die radiale Verstellung ist dementsprechend eine zusätzliche Verstellmöglichkeit zur Umfangsverstellung. Insbesondere sind die Umfangsverstellung und die Radialverstellung voneinander separat und vor allem unabhängig ausgebildet. Das bedeutet, dass beide Verstellrichtungen, also in radialer Richtung und in Umfangsrichtung, unabhängig voneinander durchführbar sind. Dies lässt es zu in erfindungsgemäßer Weise unterschiedlichen Regelungsszenarien zur Verfügung stellen. So kann beispielsweise während der Suche bzw. während des Anfahrens der Putzposition die Putzwalze abgehoben sein, um mögliche Beschädigungen der Folienbahn und/oder der Putzwalze zu vermeiden. Weiter ist es möglich, dass erst nach Erreichen der Putzposition nun ein Zustellen über die Radialverstellung der Putzwalze erfolgt. Damit reduziert sich der Abstand zwischen der Oberfläche der Putzwalze und der Oberfläche der Gießwalze, welcher auch als Putzspalt bezeichnet werden kann. Neben einer quantitativ großen Verstellung zwischen einem großen Putzspalt, zum Beispiel zum Einfädeln der Folienbahn, und einem kleinen Putzspalt ist auch eine im quantitativen Sinne kleine Anpassung denkbar. So können beispielsweise radiale Anpassungen im Bereich weniger Mikrometer, insbesondere im Bereich zwischen 10 µm und 100 µm, dazu führen, dass die später noch beschriebene Anpassung an eine Belastungssituation erfolgt. Auch kann auf diese Weise, zum Beispiel in hydraulischer, pneumatischer und/oder motorischer Weise ein Antrieb dieser Radialverstellung erfolgen.

Vorteilhaft ist es ebenfalls, wenn bei einer erfindungsgemäßen Folienmaschine eine Abrisswalze vorgesehen ist, um welche das zu einer Folienbahn erstarrte Folienmaterial beim Abheben von der Oberfläche der Gießwalze läuft. Dabei erzeugen der durch die Position der Abrisswalze definierte Abhebeort und der durch die Position des Auslassspalts definierte Aufnahmeort einen Umschlingungswinkel der Gießwalze im Bereich zwischen ca. 260° und ca. 330°. Dabei handelt es sich selbstverständlich um Winkelgrade. Bevorzugt ist ein Bereich zwischen ca. 270° und ca. 320°. Besonders bevorzugt ist ein Bereich zwischen ca. 290° und ca. 305°. Je größer dieser Umschlingungswinkel zur Verfügung gestellt wird, umso größer ist auch die Kontaktlänge. Damit können dementsprechend langsamere Kühlraten, höhere Kühlleistungen und/oder höhere Liniengeschwindigkeiten erzielbar werden. Dabei ist zu beachten, dass insbesondere immer ein Parameter zu optimieren ist. So kann beispielsweise die größere Kontaktlänge dazu verwendet werden, eine stärkere Kühlleistung zur Verfügung zu stellen. Auch kann die große Kontaktlänge eingesetzt werden, um trotz langsamer Kühlraten aufgrund dieser großen Kontaktlänge eine höhere Liniengeschwindigkeit zu fahren. Die beschriebenen Umschlingungswinkel werden insbesondere bei Gießwalzen mit Durchmessern im Bereich von ca. 1.000 mm und 1.500 mm eingesetzt. Bevorzugt sind Gießwalzen im Bereich eines Durchmessers von ca. 1.200 mm bis ca. 1.400 mm.

Ein weiterer Vorteil ist es, wenn bei einer erfindungsgemäßen Folienmaschine die Umfangsverstellung des Verstellmechanismus ausgebildet ist für eine zumindest abschnittsweise stufenlose Verstellung der Putzposition der Putzwalze in Umfangsrichtung der Gießwalze. Dabei ist insbesondere eine komplett stufenlose Verstellung der Putzposition vorteilhaft. So können beispielsweise Führungsgetriebe, Führungsschienen oder Führungsmittel vorgesehen sein, welche, zum Beispiel mittels Klemmvorrichtungen oder anderweitigen Fixiermitteln, stufenlos in jeder Umfangsposition befestigbar, fixierbar bzw. klemmbar ausgebildet sind. Bevorzugt ist es, wenn insbesondere im Absolutwinkelbereich zwischen 115° und ca. 285° der Gießwalze diese zumindest abschnittsweise stufenlose Verstellung der Putzwalze möglich ist. Dabei kann insbesondere im hinteren Bereich der Gießwalze, also bei hohen Winkelgradzahlen, eine besonders feine stufenlose Verstellung bevorzugt sein, um gerade dort eine besonders genaue Anpassung an die exakte Position der Frostlinie des Folienmaterials zu erlauben. Für die Verstellung in Umfangsrichtung kann zum Beispiel ein Kettentrieb eingesetzt werden.

Bei der erfindungsgemäßen Folienmaschine ist die Umfangsverstellung des Verstellmechanismus ausgebildet für eine Bewegung der Putzwalze in Umfangsrichtung der Gießwalze in eine Wartungsposition, insbesondere außerhalb des Gestells der Folienmaschine. Neben der primären Funktion gemäß der vorliegenden Erfindung, eine Anpassung in flexibler Weise für die Putzposition an die Frostlinie zu ermöglichen, kann auch der zusätzlich zum Betrieb notwendige Wartungseinsatz in erfindungsgemäßer Weise vereinfacht werden. So kann der Bewegungsspielraum insbesondere hinsichtlich zumindest einer zusätzlichen Endposition für die Putzwalze bzw. die Putzvorrichtung und den Verstellmechanismus erweitert werden. So ist es nun möglich, nach dieser Ausführungsform die Putzwalze in eine Wartungsposition zu bewegen, in welcher eine besonders leichte Zugänglichkeit zu einzelnen Bauteilen oder der gesamten Putzwalze möglich ist. Dies kann zum einen dazu führen, dass nun die Putzwalze aus dem Weg gefahren wird, um an andere Bauteile der Folienmaschine zu gelangen. Insbesondere kann auf diese Weise jedoch gerade die Putzwalze selbst in eine erleichterte Zugangsposition bewegbar sein. Dies ist vor allem für Wartungsarbeiten bzw. Reinigungsarbeiten nach zum Beispiel einem erfolgten Folienabriss in der Folienmaschine von großem Vorteil. Das Gestell dient dabei insbesondere der Aufnahme der entstehenden Lagerkräfte. Insbesondere kann ein solches Gestell auch als Gehäuse ausgebildet sein.
Ein weiterer Vorteil kann es sein, wenn bei einer erfindungsgemäßen Folienmaschine der Verstellmechanismus, insbesondere einer Radialverstellung des Verstellmechanismus, eine Sensorvorrichtung aufweist, für die Erfassung zumindest eines der folgenden Belastungsparameter der Putzwalze für einen Belastungsausgleich. Die Sensorvorrichtung ist dabei an die jeweilige Art des Belastungsparameters angepasst.
- Eigengewicht
- Winkel zwischen Eigengewichtsvektor der Putzwalze und der Gießwalze
- Umfangsposition der Putzwalze bezogen auf die Gießwalze
- axiale Durchbiegung der Putzwalze
- axialer Kontaktverlauf und/oder Anpresskraft der Putzwalze an der Gießwalze

Bei der voranstehenden Aufzählung handelt es sich um eine nicht abschließende Liste. Dabei kann diese Sensorvorrichtung insbesondere eingesetzt werden, um eine Eigengewichtskompensation zur Verfügung zu stellen. Dafür ist die Folienmaschine vorzugsweise mit einer Kontrolleinheit zum Empfang und zur Weiterverarbeitung von Sensorsignalen der Sensorvorrichtung ausgestattet. Das Eigengewicht ist dabei in unterschiedlicher Auswirkung auf die Kontaktsituation zu verstehen. So ist bei einer Positionierung oberhalb des Schwerpunkts und damit mit einem Kraftvektor, welcher zumindest spitzwinklig auf die Oberfläche der Gießwalze zugerichtet ist, von einer Eigengewichtsunterstützung auszugehen. Mit anderen Worten wird die sich einstellende Kontaktkraft zwischen Putzwalze und Folienmaterial durch das Eigengewicht unterstützt. Befindet sich die Putzwalze unterhalb des Schwerpunkts der Gießwalze, wird entsprechend der Kraftvektor von der Oberfläche der Gießwalze wegzeigen, so dass das Eigengewicht der Putzwalze der Kontaktkraft entgegenwirkt. Erfindungsgemäß ist auf diese Weise nun durch die Erkennung des Eigengewichts, des Eigengewichtsvektors oder indirekt durch die Bestimmung der Umfangsposition der Putzwalze eine Eigengewichtskompensation möglich. Eine ähnliche Kompensation lässt sich auch hinsichtlich der axialen Durchbiegung der Putzwalze, zum Beispiel mittels Sensorvorrichtungen in Form von Dehnmessstreifen, erreichen. Ein entsprechend sich einstellender axialer Kontaktverlauf und/oder Verlauf der Anpresskraft ist ebenfalls auf diese Weise kompensierbar.

Vorteilhaft ist es weiter, wenn bei einer erfindungsgemäßen Folienmaschine die Putzvorrichtung auf jeder Seite der Putzwalze zumindest einen separaten Antrieb für einen Rotationsantrieb der Putzwalze aufweist. Insbesondere handelt es sich dabei um Antriebsmotoren. Die Antriebe sind dabei miteinander, insbesondere über eine Kontrolleinheit, synchronisiert, so dass entsprechend ein Synchronantrieb hinsichtlich der Rotationsgeschwindigkeit zwischen Gießwalze und Putzwalze erfolgen kann. Auch wird auf diese Weise die Parallelität der beschriebenen Putzwalze sowie der Gießwalze deutlich verbessert. Unerwünschter Torsion durch entsprechende Widerlagerkräfte oder asynchrone Antriebssituationen für die Putzwalze wird auf diese Weise ebenfalls wirksam vorgebeugt. Alternativ kann auch ein passiver Antrieb über Reibung mit der Gießwalze und/oder dem Folienmaterial für die Putzwalze erfolgen. Auch ist eine mechanische Synchronisierung im Rahmen der vorliegenden Erfindung denkbar.

Vorteilhaft ist es weiter, wenn bei einer erfindungsgemäßen Folienmaschine durch die Umfangsverstellung die Putzwalze um eine Verstellachse geschwenkt wird, welche parallel, insbesondere koaxial mit der Rotationsachse der Gießwalze ausgerichtet ist. Die Verstellachse ist also die Schwenkachse, um welche die Schwenkbewegung der Putzwalze durchgeführt wird. Ist diese nun insbesondere koaxial mit der Rotationsachse der Gießwalze ausgerichtet, so schwenkt die Putzwalze dementsprechend auch um die Rotationsachse der Gießwalze. Der Abstand zwischen Putzwalze und Gießwalze bleibt dementsprechend identisch, wodurch sich der auf diese Weise definierte Putzspalt ebenfalls während der Schwenkbewegung der Putzwalze nicht ändert. Insbesondere bei einer einfachen Ausführungsform des Verstellmechanismus ohne eine Radialverstellung bringt dies große Vorteile mit sich. Bei Kombination zwischen Umfangsverstellung und Radialverstellung führt dies zu einer eindeutigen Separierung der beiden Verstellrichtungen und damit zu einer leichteren Steuerung bzw. leichteren Regelung.

Ein weiterer Vorteil ist erzielbar, wenn bei einer erfindungsgemäßen Folienmaschine eine Erkennungsvorrichtung für die Erkennung einer Frostlinie des erstarrenden Folienmaterials vorgesehen ist. Insbesondere weist der Verstellmechanismus diese Erkennungsvorrichtung auf. Zum Beispiel kann auf diese Weise eine automatische oder eine unterstützte manuelle Erkennung der Frostlinie erfolgen. Automatisiert ist beispielsweise ein Temperatursensor oder ein Infrarotsensor in der Lage, in Korrelation mit gespeicherten Temperaturverhältnissen des Folienmaterials, die Frostlinie möglichst exakt zu bestimmen. Mithilfe einer Kamera kann eine optische Kontrolle durch das Bedienpersonal erfolgen, wodurch in unterstützender Weise nun ebenfalls die Frostlinie erkannt werden kann. Dies erlaubt es, das später noch beschriebene Verfahren, insbesondere in automatisierter Weise, durchzuführen, um eine Anpassung der richtigen Position mit dem gewünschten Bezug zur Frostlinie zur Verfügung stellen zu können.

Ebenfalls Gegenstand der vorliegenden Erfindung ist ein Verfahren für die Anpassung einer Putzposition einer Putzwalze einer Folienmaschine, insbesondere gemäß der vorliegenden Erfindung, aufweisend die folgenden Schritte:
- Erfassen einer Frostlinie erstarrenden Folienmaterials auf der Oberfläche einer Gießwalze der Folienmaschine,
- Bewegen der Putzwalze mittels einer Umfangsverstellung eines Verstellmechanismus einer Putzvorrichtung in Umfangsrichtung der Gießwalze zur Putzposition bei der Frostlinie.

Durch die Verwendung einer erfindungsgemäßen Folienmaschine bringt ein erfindungsgemäßes Verfahren die gleichen Vorteile mit sich, wie sie ausführlich mit Bezug auf eine erfindungsgemäße Folienmaschine erläutert worden sind. Das Erfassen der Frostlinie und die entsprechende Bewegung kann dabei sowohl automatisiert, zum Beispiel mithilfe einer Sensorerfassung, als auch manuell durch eine Sichtprüfung oder durch eine Kameraüberwachung erfolgen.

Ein erfindungsgemäßes Verfahren lässt sich dahingehend weiterbilden, dass die Frostlinie mittels einer Erkennungsvorrichtung erkannt wird, insbesondere in kontinuierlicher Weise, um die Bewegung der Putzwalze zur Putzposition bei der Frostlinie gesteuert und/oder geregelt durchzuführen. Damit kann eine Kontrollvorrichtung mit entsprechenden Sensorsignalen der Erkennungsvorrichtung bestückt werden, um anschließend in steuernder und/oder regelnder Weise die Bewegung der Putzwalze durchzuführen. So ist beispielsweise zu Beginn einer Produktion eine entsprechend automatische Anpassung denkbar. Durch eine kontinuierliche Erfassung kann darüber hinaus ein Nachregeln zur Verfügung gestellt werden, so dass selbst bei Schwankungen in der Produktionsqualität und damit einhergehender Variation des Ortes der Frostlinie die Putzfunktionalität in erfindungsgemäßer Weise mit hoher Putzqualität ausgestattet wird.

Vorteilhaft ist es ebenfalls, wenn bei einem erfindungsgemäßen Verfahren die Putzposition von der Putzwalze im Bereich von ±5°, insbesondere 0° bis 5°, um die erkannte Frostlinie, insbesondere im Bereich von ±2°, bevorzugt zwischen 0° und 2°, um die erkannte Frostlinie eingenommen wird. Bei diesen Gradwerten handelt es sich um Winkelgrade um die Frostlinie. Je genauer die Putzposition eingenommen wird, umso genauer und umso höher wird auch die Putzfunktion bzw. die Putzqualität zur Verfügung gestellt. Die Vorgabe eines entsprechenden Toleranzbereichs erlaubt es jedoch, sowohl die entsprechend notwendige Erkennungsvorrichtung, als auch die Genauigkeit der Bewegungsmöglichkeit des Verstellmechanismus mit einfacherer Regelung und einfacherer Mechanik auszustatten. Ebenfalls von Vorteil ist es, wenn bei einem erfindungsgemäßen Verfahren eine Erfassung zumindest eines Belastungsparameters der Putzwalze erfolgt, wobei anhand des erfassten Belastungsparameters ein Belastungsausgleich für die Putzwalze durchgeführt wird. Darunter ist insbesondere eine Kompensation des Eigengewichts, eine Kompensation der Durchbiegung und/oder eine Kompensation der Kontaktkraft zu verstehen, wie sie bereits mehrfach erläutert worden sind.

Weitere Merkmale, Vorteile und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine erste Ausführungsform einer erfindungsgemäßen Folienmaschine,
- Fig. 2: die Ausführungsform der Fig. 1 bei der Suche nach der Frostlinie,
- Fig. 3: die Ausführungsform der Fig. 1 bis 2 mit der Putzvorrichtung in Putzposition,
- Fig. 4: die Ausführungsform der Fig. 1 bis 3 mit der Putzvorrichtung in einer Parkposition,
- Fig. 5: die Ausführungsform der Fig. 1 bis 4 mit der Putzvorrichtung in einer Wartungsposition,
- Fig. 6: eine Draufsicht auf eine Folienmaschine mit der Putzwalze in einer ersten Position und
- Fig. 7: die Darstellung der Fig. 6 mit einer Putzwalze in der zweiten Position.

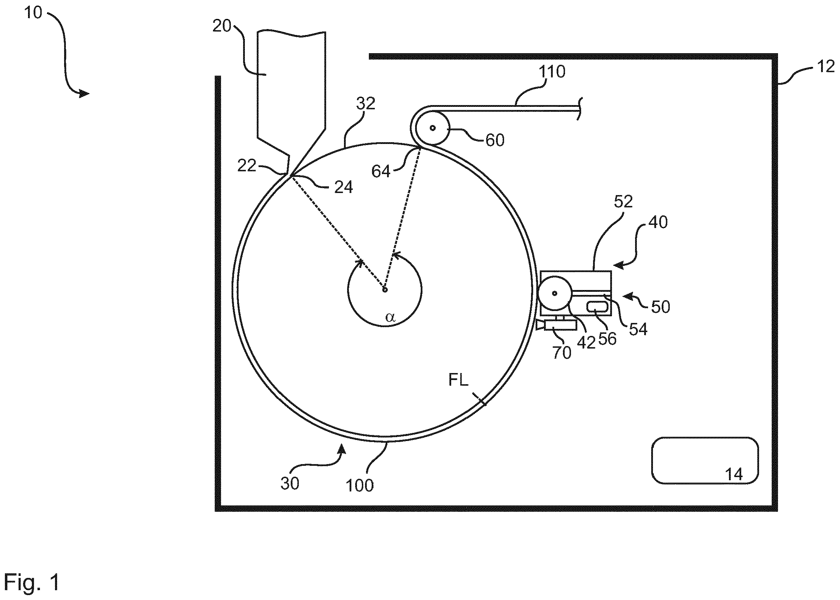

Die Fig. 1 bis 5 zeigen eine Ausführungsform einer erfindungsgemäßen Folienmaschine 10. Innerhalb eines Gestells 12, welches hier auch als Gehäuse ausgebildet sein kann, sind die Hauptkomponenten der Folienmaschine 10 angeordnet und insbesondere auch fest bzw. beweglich gelagert. Ausgehend von einer Auslassvorrichtung 20 wird über einen Auslassspalt 22 fließfähiges Folienmaterial 100 aufgebracht. Dies erfolgt zum Beispiel durch vorangestellte Extrudervorrichtungen, welche entsprechendes Kunststoffgranulat aufschmelzen und durch den Auslassspalt 22 auf der Oberfläche 32 der Gießwalze 30 anordnen.

Die Gießwalze 30 rotiert gegen den Uhrzeigersinn und weist eine gekühlte Oberfläche 32 auf. Damit erfolgt ein Erstarren des Folienmaterials 100 während der Rotation bis zu einem bestimmten Zeitpunkt das fließfähige Folienmaterial 100 zu einer Folienbahn 110 erstarrt ist. Der Ort dieses Erstarrens ist als Frostlinie FL in Fig. 1 dargestellt.

Wie der Fig. 1 ebenfalls zu entnehmen ist, ist durch eine Anordnung einer entsprechenden Abrisswalze 60 ein Abhebeort 64 für die Folienbahn 110 definiert. Zusammen mit dem Aufnahmeort 24 bildet sich auf diese Weise ein Umschlingungswinkel α aus, welcher hier bei ca. 300° der Gießwalze 30 liegt. Damit wird eine entsprechend hohe Kontaktlänge ausgebildet, so dass auf diese Weise gemäß Fig. 1 eine Reduktion der Kühlrate möglich wäre, wodurch eine langsamere Abkühlung zu einer in Umfangsrichtung gegen den Uhrzeigersinn nach hinten verschobenen Frostlinie FL führen würde. Bei gleichbleibender Umdrehungsgeschwindigkeit und damit gleichbleibender Liniengeschwindigkeit könnte auf diese Weise eine Stretchfolie mit höherer Dehnfähigkeit zur Verfügung gestellt werden.

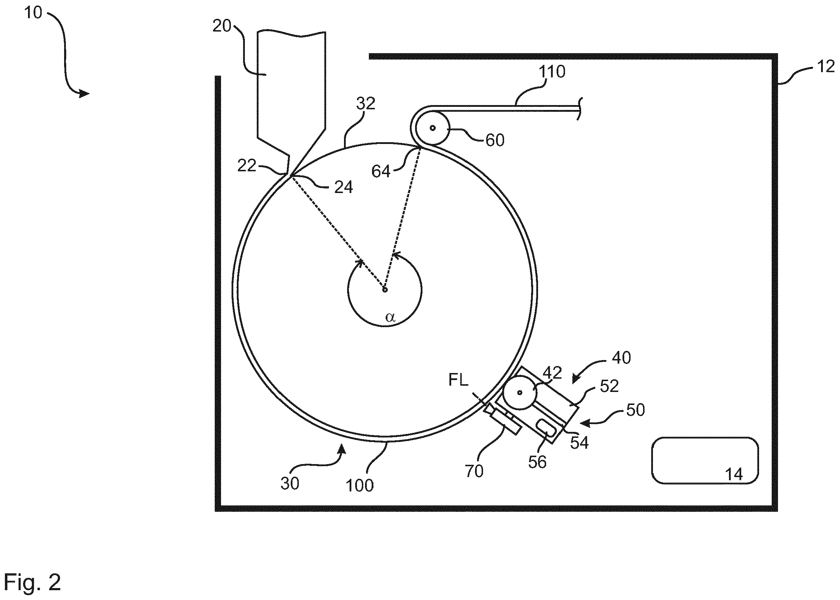

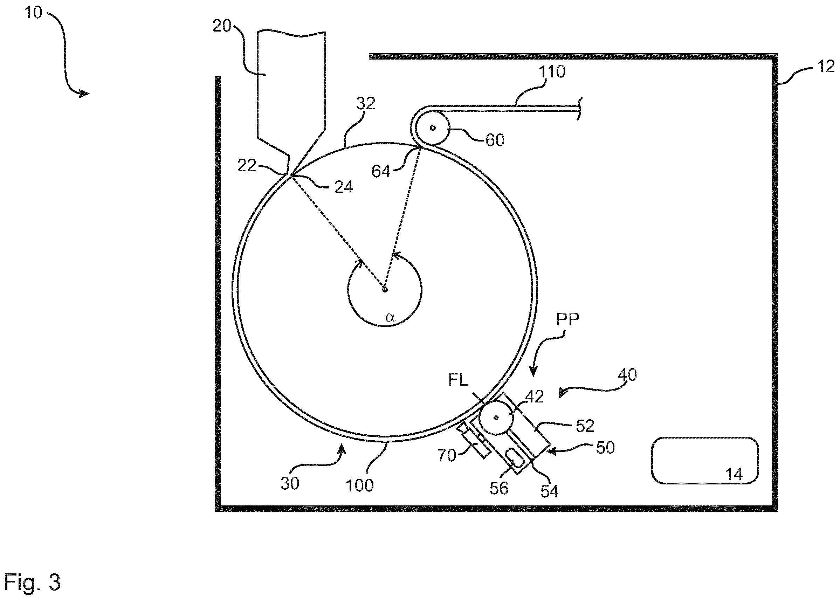

Wird nun das Produktionsverfahren durchgeführt bzw. fortgesetzt, so kann einmalig oder kontinuierlich eine Anpassung der Putzposition PP einer Putzvorrichtung 40 durchgeführt werden, wie sie nachfolgend beschrieben wird. So wird ausgehend von Fig. 1 eine Erkennungsvorrichtung 70 eingesetzt, um die Frostlinie FL zu erkennen. Dies kann beispielsweise eine Kamera, ein Infrarotsensor und/oder ein Temperatursensor sein. Ein Verstellmechanismus 50 ist hier mit einer Umfangsverstellung 52 ausgestattet, zu welchem auch die Erkennungsvorrichtung 70 gehört. Es erfolgt also nun eine Umfangsverstellung bis zu einem Ort gemäß Fig. 2. Hier erkennt die Erkennungsvorrichtung 70 die Frostlinie FL. Über ein Rückfahren im Uhrzeigersinn entlang der Umfangsrichtung der Gießwalze 30 wird die Putzposition PP der Putzwalze 42 gemäß Fig. 3 eingenommen. In dieser Position ist eine Radialverstellung 54 noch unerheblich. Die voranstehenden Schritte, die Erfassung der Sensordaten sowie die entsprechende Steuerung bzw. Regelung des Verstellmechanismus 50 erfolgt durch die dargestellte Kontrolleinheit 14, welche signalkommunizierend mit den entsprechenden Bauteilen verbunden ist. Hier kann darüber hinaus eine Sensorvorrichtung 56 die später noch erläuterte Sensorik für eine notwendige oder erwünschte Kompensation des Eigengewichts, des Kontaktdruckes oder ähnlicher Belastungsparameter zur Verfügung stellen.

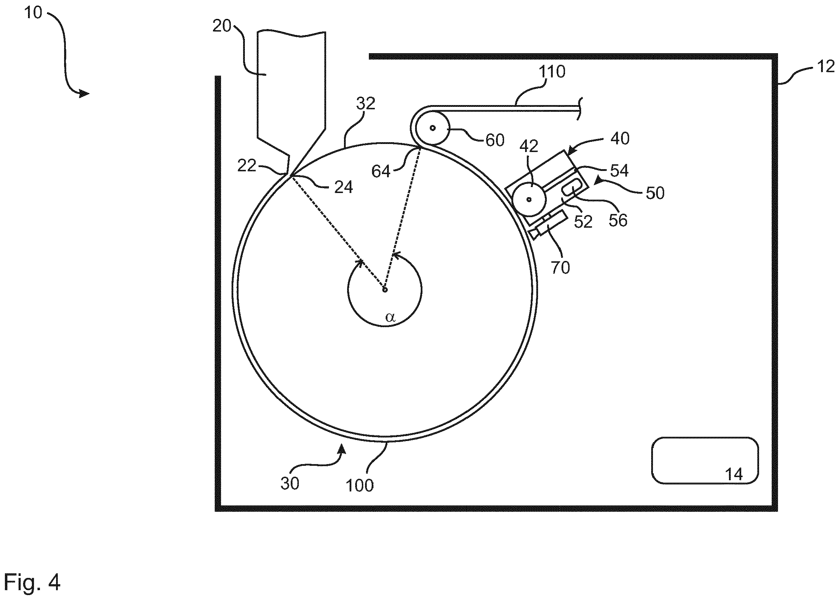

Für das Ende der Produktion oder für ein Einfädeln einer Folienbahn 110 zu Beginn der Produktion kann eine Parkposition gemäß Fig. 4 von der Putzvorrichtung 40 eingenommen werden. Neben der Verstellung mithilfe der Umfangsverstellung 52 ist hier die Putzwalze 42 radial mithilfe der Radialverstellung 54 nach außen versetzt, so dass der sich einstellende Putzspalt deutlich vergrößert wurde. Ein entsprechendes Einfädeln kann auf diese Weise leichter erfolgen.

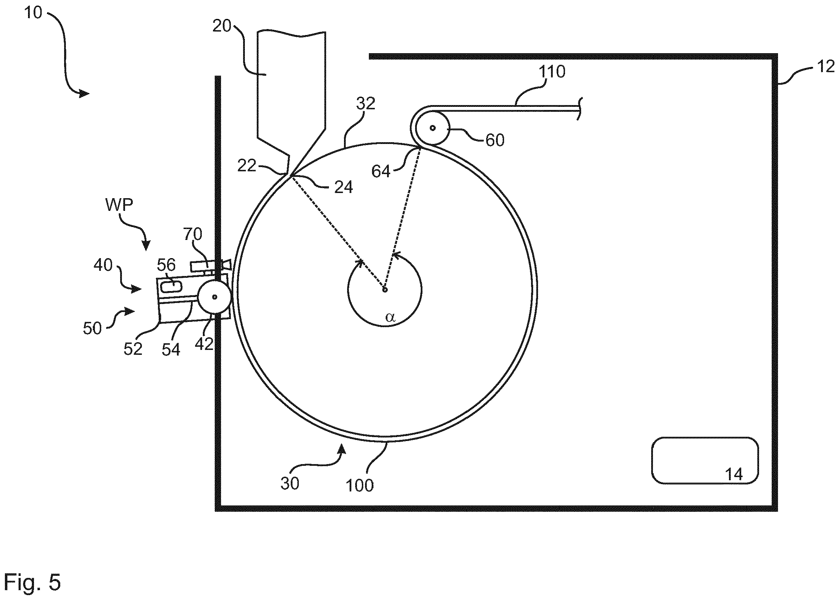

Erfolgt ein Abriss der Folienbahn 100 innerhalb der Folienmaschine 10 oder sind Wartungsarbeiten in der Folienmaschine 10 innerhalb des Gestells 12 oder an der Putzvorrichtung 40 notwendig, so kann der gesamte Verstellmechanismus 50 die Putzvorrichtung 40 in eine Wartungsposition WP verfahren, wie sie die Fig. 5 zeigt. Hier befindet sich die Putzwalze 42 und insbesondere der gesamte Verstellmechanismus 50 sowie ein großer Teil der Putzvorrichtung 40 außerhalb des Gestells 12.

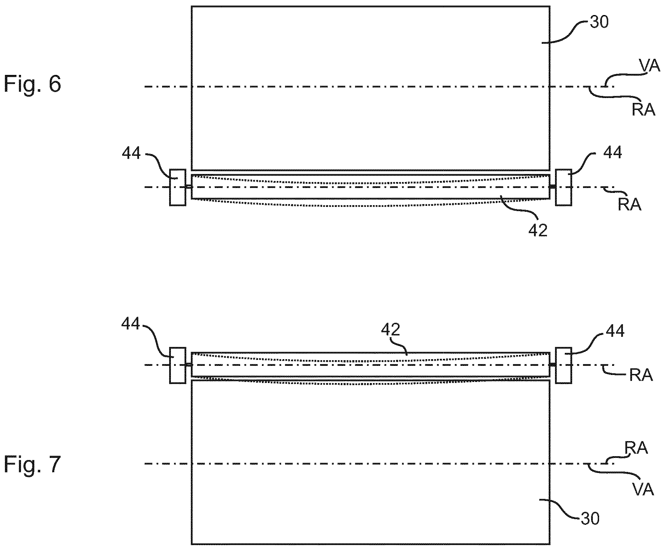

Die Fig. 6 und 7 zeigen eine Möglichkeit einer Kompensation unterschiedlicher Belastungsparameter der Putzwalze 42. So ist hier zu erkennen, dass bei einer Situation der Anordnung der Putzwalze 42 unterhalb der Gießwalze 30 sowohl eine entsprechende Durchbiegung (siehe gepunktete Linien) als auch der entsprechende Kraftvektor mit einer Ausrichtung nach unten die Kontaktkraft zwischen Putzwalze 42 und Gießwalze 30 reduziert. Ein entsprechendes Nachstellen nach oben bei einer Reduktion des Putzspaltes kann zu einer Kompensation dieses Effekts führen. In umgekehrter Weise ist die Situation gemäß Fig. 7 dadurch ausgebildet, dass die beschriebene Durchbiegung der Putzwalze 42 und ihr Eigengewicht die Kontaktwirkung und damit die Druckkraft zur Gießwalze 30 unterstützt. Für eine entsprechende Kompensation dieser Einsatzsituation würde eine Radialverstellung 54 diesen Putzspalt und/oder die Andruckkraft wieder vergrößern und damit den Kompensationseffekt erzeugen. Wie die Fig. 6 und 7 darüber hinaus zeigen, sind die entsprechenden Achsen, also die Verstellachse VA des Verstellmechanismus 50 und die Rotationsachse RA der Gießwalze 30 parallel und koaxial miteinander ausgerichtet. Die Rotationsachse RA der Putzwalze 42 ist parallel zur Rotationsachse RA der Gießwalze 30 ausgerichtet. Zuletzt finden sich zwei separate Antriebe 44 in Form von Elektromotoren auf beiden Seiten der Putzwalze 42, wobei diese Antriebe 44 miteinander synchronisiert sind. Die Synchronisation kann zum Beispiel über die bereits erläuterte Kontrolleinheit 14 gewährleistet werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Folienmaschine
- 12: Gestell
- 14: Kontrolleinheit
- 20: Auslassvorrichtung
- 22: Auslassspalt
- 24: Aufnahmeort
- 30: Gießwalze
- 32: Oberfläche
- 40: Putzvorrichtung
- 42: Putzwalze
- 44: Antrieb
- 50: Verstellmechanismus
- 52: Umfangsverstellung
- 54: Radialverstellung
- 56: Sensorvorrichtung
- 60: Abrisswalze
- 64: Abhebeort
- 70: Erkennungsvorrichtung

- 100: Folienmaterial
- 110: Folienbahn

- α: Umschlingungswinkel
- PP: Putzposition
- WP: Wartungsposition
- VA: Verstellachse
- RA: Rotationsachse
- FL: Frostlinie

## Patentansprüche

1. Folienmaschine (10) für die Herstellung von Stretchfolie, aufweisend eine Auslassvorrichtung (20) mit einem Auslassspalt (22) für den Auslass fließfähigen Folienmaterials (100) und eine drehbar gelagerte Gießwalze (30) für die Aufnahme des ausgelassenen fließfähigen Folienmaterials (100) auf der Oberfläche (32) der Gießwalze (30), weiter aufweisend eine Putzvorrichtung (40) mit einer drehbar gelagerten Putzwalze (42) für eine Kontaktierung des auf der Oberfläche (32) der Gießwalze (30) angeordneten Folienmaterials (100) sowie ein Gestell (12) zur Aufnahme von entstehenden Lagerkräften, wobei, die Putzvorrichtung (40) einen Verstellmechanismus (50) mit einer Umfangsverstellung (52) für eine Verstellung einer Putzposition (PP) der Putzwalze (42) entlang der Umfangsrichtung der Gießwalze (30) aufweist, wobei der Verstellmechanismus (50) eine Radialverstellung (54) für eine Verstellung der Radialposition der Putzwalze (42) aufweist zur Veränderung des Abstandes und/oder der Andruckkraft der Putzwalze (42) zur Oberfläche (32) der Gießwalze (30) und wobei eine Abrisswalze (60) vorgesehen ist, um welche das zu einer Folienbahn (110) erstarrte Folienmaterial (100) beim Abheben von der Oberfläche (32) der Gießwalze (30) läuft,
**dadurch gekennzeichnet, dass** der durch die Position der Abrisswalze (60) definierte Abhebeort (64) und der durch die Position des Auslassspalts (22) definierte Aufnahmeort (24) einen Umschlingungswinkel (α) der Gießwalze (30) im Bereich zwischen ca. 260° und ca. 330° erzeugen, wobei die Umfangsverstellung (52) des Verstellmechanismus (50) ausgebildet ist für eine Bewegung der Putzwalze (42) in Umfangsrichtung der Gießwalze (30) in eine Wartungsposition (WP), außerhalb des Gestells (12) der Folienmaschine (10).

2.. Folienmaschine (10) nach einem der vorangegangenen Ansprüche, **dadurch gekennzeichnet, dass**
die Umfangsverstellung (52) des Verstellmechanismus (50) ausgebildet ist für eine zumindest abschnittweise stufenlose Verstellung der Putzposition (PP) der Putzwalze (42) in Umfangsrichtung der Gießwalze (30).

3. Folienmaschine (10) nach einem der vorangegangenen Ansprüche, **dadurch gekennzeichnet, dass**
die Putzwalze (42) durch die Umfangsverstellung (52) um eine Verstellachse (VA) geschwenkt wird, welche parallel, insbesondere koaxial mit der Rotationsachse (RA) der Gießwalze (30) ausgerichtet ist.

4. Verfahren für die Anpassung der Putzposition (PP) einer Putzwalze (42) einer Folienmaschine (10), mit den Merkmalen einer der Ansprüche 1 bis 3 aufweisend die folgenden Schritte:
- Erfassen einer Frostlinie (FL) erstarrenden Folienmaterials (100) auf der Oberfläche (32) einer Gießwalze (30) der Folienmaschine (10),
- Bewegen der Putzwalze (42) mittels einer Umfangsverstellung (52) eines Verstellmechanismus (50) einer Putzvorrichtung (40) in Umfangsrichtung der Gießwalze (30) zur Putzposition (PP) bei der Frostlinie (FL), wobei die Putzposition (PP) von der Putzwalze (42) im Bereich von +-5° um die erkannte Frostlinie (FL) eingenommen wird.

5. Verfahren nach Anspruch 4, **dadurch gekennzeichnet, dass**
die Putzposition (PP) von der Putzwalze (42) im Bereich von +-2° um die erkannte Frostlinie (FL), eingenommen wird.

## Claims

1. Film machine (10) for the production of stretch film, comprising an outlet device (20) having an outlet gap (22) for the outlet of flowable film material (100) and a rotatably-mounted casting roll (30) for receiving the output flowable film material (100) on the surface (32) of the casting roll (30), wherein it further comprises a cleaning device (40) with a rotatably-mounted cleaning roll (42) for contacting the film material (100) arranged on the surface (32) of the casting roll (30), as well as a frame (12) to absorb the resulting bearing forces,
wherein the cleaning device (40) has an adjustment mechanism (50) with a circumferential adjustment (52) to adjust the cleaning position (PP) of the cleaning roll (42) in the circumferential direction of the casting roll (30), wherein the adjustment mechanism (50) has a radial adjustment (54) to adjust the radial position of the cleaning roller (42) in order to change the distance and/or the pressing force of the cleaning roll (42) on the surface (32) of the casting roll (30), and wherein a tear-off roll (60) is provided around which the solidified film material (100) runs to a film web (110) upon being lifted from the surface (32) of the casting roll (30),
**characterized in that**
the lifting-off point (64) defined by the position of the tear-off roll (60) and the receiving point (24) defined by the position of the outlet gap (22) produces a wrap angle (α) of the casting roll (30) between about 260° and 330°, wherein the circumferential adjustment (52) of the adjustment mechanism (50) is designed for movement of the cleaning roll (42) in the circumferential direction of the casting roll (30) to a maintenance position (WP) outside the frame (12) of the film machine (10).

2. Film machine (10) according to any one of the preceding claims,
**characterized in that**
the circumferential adjustment (52) of the adjustment mechanism (50) is designed for an at least continuous section-wise adjustment of the cleaning position (PP) of the cleaning roll (42) in the circumferential direction of the casting roller (30).

3. Film machine (10) according to one of the preceding claims,
**characterized in that**
the cleaning roll (42) is pivoted by the circumferential adjustment (52) about an adjustment axis (VA), which is parallel, in particular coaxially aligned, with the axis of rotation (RA) of the casting roll (30).

4. Method for adjusting the cleaning position (PP) of a cleaning roll (42) of a film machine (10) having the features of one of the claims 1 to 3, comprising the following steps:
- detecting a frost fine (FL) solidifying the film material (100) on the surface (32) of a casting roll (30) of the film machine (10),
- moving the cleaning roller (42) by means of a circumferential adjustment (52) of an adjustment mechanism (50) of a cleaning device (40) in the circumferential direction of the casting roll (30) to the cleaning position (PP) at the frost line (FL), wherein the cleaning position (PP) of the cleaning roll (42) lies in the range of ±5° around the detected frost line (FL).

5. Method according to claim 4,
**characterized in that**
the cleaning position (PP) of the cleaning roll (42) lies in the range of ±2° around the detected frost line (FL).

## Revendications

1. Machine à film (10) pour la fabrication d'un film étirable, comprenant un dispositif de sortie (20) avec un interstice de sortie (22) pour la sortie d'un matériau de type film (100) fluide et un cylindre de coulée (30) pour le logement du matériau de type film (100) fluide sortant sur la surface (32) du cylindre de coulée (30), comprenant en outre un dispositif de nettoyage (40) avec un cylindre de nettoyage (42) logé de manière rotative pour un contact avec le matériau de type film (100) disposé sur la surface (32) du cylindre de coulée (30) ainsi qu'un châssis (12) pour l'absorption de forces de paliers résultantes,
le dispositif de nettoyage (40) comprenant un mécanisme de réglage (50) avec un réglage circonférentiel (52) pour un réglage d'une position de nettoyage (PP) du cylindre de nettoyage (42) le long de la circonférence du cylindre de coulée (30), le mécanisme de réglage (50) comprend un réglage radial (54) pour un réglage de la position radiale du cylindre de nettoyage (42) pour la modification de la distance et/ou de la force de pression du cylindre de nettoyage (42) sur la surface (32) du cylindre de coulée (30) et un cylindre de détachement (60) étant prévu, autour duquel le matériau de type film (100) solidifié en une bande de film (110) s'enroule lors du soulèvement de la surface (32) du cylindre de coulée (30),
**caractérisée en ce que**
le lieu de soulèvement (64) défini par la position du cylindre de détachement (60) et le lieu de logement (24) défini par la position de l'interstice de sortie (22) forment un angle d'enroulement (α) du cylindre de coulée (30) entre environ 260° et environ 330°, le réglage circonférentiel (52) du mécanisme de réglage (50) étant conçu pour un mouvement du cylindre de nettoyage (42) dans la direction de la circonférence du cylindre de coulée (30) dans une position de maintenance (WP), à l'extérieur du châssis (12) de la machine à film (10).

2. Machine à film (10) selon l'une des revendications précédentes,
**caractérisée en ce que**
le réglage circonférentiel (52) du mécanisme de réglage (50) est conçu pour un réglage au moins partiellement progressif de la position de nettoyage (PP) du cylindre de nettoyage (42) dans la direction de la circonférence du cylindre de coulée (30).

3. Machine à film (10) selon l'une des revendications précédentes,
**caractérisée en ce que**
le cylindre de nettoyage (42) est pivoté par le réglage circonférentiel (52) autour d'un axe de réglage (VA) qui est orienté parallèlement, plus particulièrement de manière coaxiale avec l'axe de rotation (RA) du cylindre de coulée (30).

4. Procédé pour l'adaptation de la position de nettoyage (PP) d'un cylindre de nettoyage (42) d'une machine à film (10), avec les caractéristiques d'une des revendications 1 à 3, comprenant les étapes suivantes :
- détection d'un matériau de type film (100) se solidifiant sur une ligne de gel (FL) sur la surface (32) d'un cylindre de coulée (30) de la machine à film (10),
- déplacement du cylindre de nettoyage (42) au moyen d'un réglage circonférentiel (52) d'un mécanisme de réglage (50) d'un dispositif de nettoyage (40) dans la direction de la circonférence du cylindre de coulée (30) vers la position de nettoyage (PP) sur la ligne de gel (FL), la position de nettoyage (PP) étant adoptée par le cylindre de nettoyage (42) dans un intervalle de +- 5° autour de la ligne de gel (FL) détectée.

5. Procédé selon la revendication 4,
**caractérisé en ce que**
la position de nettoyage (PP) est adoptée par le cylindre de nettoyage (42) dans un intervalle de +- 2° autour de la ligne de gel (FL) détectée.
